# EUROPEAN PATENT SPECIFICATION

(11) **EP 2 964 985 B1**
(45) Date of publication and mention of the grant of the patent: **05.04.2017**
(21) Application number: 14703093.6
(22) Date of filing: 07.02.2014
(51) Int. Cl.: F16K 15/03, F16K 3/02, F16K 15/18

(54) **DUAL PLATE CHECK VALVE ASSEMBLY WITH RISING STEM**
DOPPELPLATTEN-RÜCKSCHLAGVENTILANORDNUNG MIT STEIGENDER SPINDEL
ENSEMBLE CLAPET ANTI-RETOUR À DEUX BATTANTS ET À TIGE D'ÉLÉVATION

(30) Priority: 08.03.2013 NO 20130357
(43) Date of publication of application: 13.01.2016
(73) Proprietor: Floberg, Jan, 2230 Skotterud (NO)
(72) Inventor: Floberg, Jan, 2230 Skotterud (NO)
(74) Representative: Plougmann Vingtoft a/s
(86) International application number: PCT/EP2014/052446
(87) International publication number: WO 2014/135333

(56) References cited:
- WO-A1-90/14536
- DE-A1- 2 546 227
- DE-C1- 19 803 364
- US-A- 5 819 791
- US-A1- 2013 019 966

## Description

### FIELD OF THE INVENTION

The present invention relates to a dual plate check valve assembly for controlling the direction of flow in a piping system, comprising a pressure retaining enclosure comprising a valve body having a valve bore and defining a valve seat and a disc assembly arranged inside the valve body comprising two disc members adapted to engage with the valve seat to control the flow through the valve bore.

### BACKGROUND OF THE INVENTION

When a conventional dual disc non-return check valve is installed in vertical or horizontal process piping systems, a separate drain valve connected to a piping drain line must be installed downstream the check valve in order to drain the downstream piping of stagnant water when there is no flow in the piping or in order to relieve trapped pressure in the downstream piping in shut down situations. The purpose of a conventional non-return check valve is to stop process media and/or pressure on the downstream side of the valve from entering the upstream side of the valve thereby preventing reverse flow which can damage upstream equipment.

The function of a conventional dual disc check valve is as follows. Flow is only allowed going from the upstream side to the downstream side of the valve. When there is equal pressure on the upstream and the downstream of the valve, one or multiple springs will force the two discs/clappers towards the integral valve seat machined in the valve body. The surfaces on the discs constitute a sealing towards the surface on the integral valve seat. The dual discs may be equally shaped as a half circle, in other words D-shaped. The bore in the valve body is divided in two flow paths by an integral section of the valve body, and the flow paths is closed by the discs sealing against the integral valve seat. When a pressure generator upstream the valve generates a force that exceeds the force applied to the discs by one or more springs and any downstream pressure, the hinged discs will rotate on the hinge pin and allow the process media to flow to the downstream side of the valve. If a pressure is generated on the downstream side of the valve, exceeding the pressure on the upstream side, the two discs will be forced towards the valve seat and the process media will be stopped from flowing upstream by the sealing between the discs and the valve seat. The energized spring(s) will contribute to force the discs towards the valve seat in this process and thereby help sealing the check valve.

Further details about conventional dual disc non-return valve are given in Valve Data Sheets (VDS) in NORSOK L-001, such as VDS CHAS50R which specifies a dual disc check valve in stainless steel material.

In a situation where an upstream pressure generator, such as a pump or a compressor, is stopped e.g. for maintenance purposes and there is no flow in the piping system, pressure will be trapped on the downstream side of the non-return check valve. In such systems separate drain valves must be used to release the trapped pressure downstream of a conventional non-return check valve, especially if the valve is mounted in vertical piping with normal flow upwards. Hence, a need exists for a non-return check valve which does not require the installation of separate drain valves increasing the cost of piping systems.

Also, when process piping systems are pressure tested prior to normal use, non-return check valves are often damaged due to pressurisation from the downstream side of the valve, because the piping test pressure often exceeds the pressure rating on the discs and the seat of conventional dual disc non-return check valves. Hence, an improved non-return check valve which is not damaged during pressure testing would be advantageous.

WO90/14536 is regarded as being the prior art closest to the subject-matter of claim 1, and discloses a dual plate check valve assembly for controlling the direction of flow in a piping system, comprising: - a pressure retaining enclosure comprising a valve body having a valve bore and defining a valve seat; and - a disc assembly arranged inside the valve body and comprising two disc members adapted to engage with the valve seat to control the flow through the valve bore; wherein the disc assembly is displaceable arranged inside the valve body in a transverse direction in relation to the direction of flow, and the dual plate check valve assembly comprises a rising stem mechanism configured to transversally displace the disc assembly between a lowered position, wherein the disc assembly may control the flow through the valve bore and a raised position wherein the disc assembly is lifted at least partially clear of the valve bore and the valve seat, leaving the valve bore at least partially open to achieve free flow through the valve bore.

### OBJECT OF THE INVENTION

An object of the present invention is to provide an improved check valve that contributes to the solving of the above mentioned problems of the prior art. More specifically, it is an object to provide a check valve which can withstand pressure testing from the downstream side of the valve. A further object is to provide a non-return check valve which reduces the number drain valves needed to drain a pipe system incorporating a check valve.

### SUMMARY OF THE INVENTION

Thus, the above described object and several other objects are intended to be obtained in a first aspect of the invention by providing a dual plate check valve assembly for controlling the direction of flow in a piping system, comprising: a pressure retaining enclosure comprising a valve body having a valve bore and defining a valve seat; and a disc assembly arranged inside the valve body and comprising two disc members adapted to engage with the valve seat to control the flow through the valve bore; wherein the disc assembly is displaceable arranged inside the valve body in a transverse direction in relation to the direction of flow, and the dual plate check valve assembly comprises a rising stem mechanism configured to transversally displace the disc assembly between a lowered position, wherein the disc assembly may control the flow through the valve bore and a raised position wherein the disc assembly is lifted at least partially clear of the valve bore and the valve seat, leaving the valve bore at least partially open to achieve free flow through the valve bore in both directions.

By providing the dual plate check valve with a rising stem mechanism, the disc assembly can be lifted clear of the valve bore and the integral valve seat in a transversal direction. Hereby reverse flow and pressurisation of the upstream piping is allowed by lifting the disc assembly partially or fully clear of the valve bore and into the valve body retrieval cavity. In this way, downstream stagnant process media and/or trapped pressure are also allowed to enter the upstream side of the valve in a controlled operation.

Also, in a piping system maintenance- or shut down situation, after the disc assembly has been operated partially or fully clear of the valve bore in the radial direction so that the disc assembly is eccentric with the circular valve bore, the process media on the downstream side of the valve can then be drained through existing drain lines on the upstream side of the valve, typically from a drain point in a pump housing, and costs for a drain system downstream the check valve can be saved.

In one embodiment the disc assembly may comprise two or more disc members.

Further, in a piping pressure test situation, the piping can be evenly pressurized from both upstream and downstream the valve as the pressure is applied also to the upstream side of the check valve without stressing the valve trim when the disc assembly is lifted clear of the integral seat.

Furthermore the valve body may comprise a retrieval cavity into which the disc assembly is lifted when in the raised position. Hereby the disc assembly is kept inside the valve body at all times, which reduces the number and complexity of gaskets required in the construction of the check valve assembly.

Additionally the rising stem may be provided with an outside screw and yoke principle by the rising stem comprising a threaded section and a stem nut or other threaded element cooperating with the threaded section. By using a rising stem for displacing the disc assembly a clear visual indication of the position of the disc assembly may be provided.

Still further, the dual plate check valve assembly may also comprise a yoke for guiding the rising stem to lift the disassembly from the valve bore and the valve seat. In one embodiment the yoke may be provided with a yoke bushing engaging with the stem thread provided on an outside part of the rising stem, thereby providing an outside screw and yoke principle. The yoke will provide stability to the rising stem thereby preventing jamming of the disc assembly during displacement.

The valve body of dual plate check valve assembly described above may further comprise a demountable bonnet flange and the rising stem penetrates the bonnet flange through compressed bonnet glands arranged in the in the bonnet flange. Further, the yoke may be fixed to the bonnet flange, e.g. by screw connections, welding or threads. Also, the yoke may be an integral part of the bonnet flange.

In one embodiment of the dual plate check valve assembly the hinged disc members are rotatable arranged on a hinge pin and one or multiple spring members arranged around the hinge pin and configured to force the disc members towards the valve seat when the disc assembly is in the lowered position. Also, the hinge pin may be an integral part of the rising stem.

Further, the disc assembly may comprise a rotation stopper pin for controlling the rotation of the disc members.

Additionally the disc assembly may be provided with an upper hinge retainer and a lower hinge retainer into which the hinge pin and the rotation stopper pin is arranged.

In one embodiment the dual plate check valve assembly described above may be provided with one or more steering holes in the valve body and the steering holes may be configured to receive a part of the disc assembly, such as the hinge pin and/or the rotation stopper pin, to control the position of the disc assembly when in the lowered position. By the disc assembly engaging the steering holes, not only the position of the disc assembly is controlled, also the structural integrity of the construction may be secured as the disc assembly is fixated at a lower point.

By incorporating a rising stem with an outside screw and yoke on a dual disc check valve, the valve disc assembly comprising the two discs/clappers, hinge pin, rotation stopper pin, spring and upper and lower hinge retainers can be lifted clear of the integral valve seat in the radial/transverse direction in any of the above situations. This way, downstream stagnant process media and/or trapped pressure is allowed to enter the upstream side of the valve, when the valve is lifted e.g. by an operator.

In a piping system maintenance or shut down situation, the process media can then be drained through existing drain lines on the upstream side of the valve, typically from a drain point in a pump housing.

In a piping pressure test situation, e.g. during pressure testing, the piping can be evenly pressurized from both upstream and downstream the valve as the pressure is applied also to the upstream side of the check valve without stressing the valve trim as this is lifted clear of the integral seats in the valve body.

A valve stem may be connected to the disc assembly by the stem penetrating the bonnet flange through suitable compressed gaskets. The upper outside part of the stem can be manufactured with suitable threads which are engaged in corresponding threads in the yoke bushing, or it can be directly connected to an electrical, pneumatic or hydraulic actuator fixed to the yoke.

The valve stem may be internally connected to the valve disc assembly in the upper hinge retainer, so that when the stem is operated in and out through the bonnet flange the disc assembly comprising the two discs/clappers can slide fully clear of the valve bore. This will allow reverse flow, hence free flow in both directions through the valve.

When the stem is operated to the position where the two disc members are fully engaged and co-centric with the corresponding integral seat, the valve will function as a conventional non-return check valve. In this position, the lower ends on hinge pin and the rotation stopper may enter corresponding steering holes drilled in the valve body. The centre to centre distance between the steering holes are equal to the centre to centre distance between the hinge pin and the rotation stopper pin.

A system incorporating a dual disc check valve according to an embodiment of the invention may be assembled as follows. The valve body constituting a pressure retaining enclosure versus the surrounding environment together with the bonnet is connected to upstream and downstream piping. A yoke, consisting of multiple rods plus a yoke flange or manufactured as one separate piece or being an integral part of the bonnet flange, is guiding the stem when the stem is operated axially through the bonnet. Suitable gaskets or glands, compressed via the gland follower and the gland flange by gland flange bolts and nuts, are sealing between the stem and the bonnet flange.

The upper hinge retainer has two drilled holes in which the hinge and the rotation stopper is fixed by grub screws or similar. The hinge pin constitutes the axis on which the two discs are rotating. This rotation is limited by the rotation stopper pin, the spring(s) and the valve body. The spring is spun around the hinge and its ends / legs are forcing the discs towards the inside seat side in the valve body.

The hinge pin and the rotation stopper pin are fixed on the lower side in the lower hinge retainer, comprising two blocks or a split block. The ends of the hinge and the rotation stopper may exceed the lower hinge retainer and may enter two corresponding steering holes when the dual discs are operated to the lowered position with the circular disc assembly co-centric with the bore in the valve body. The upper hinge retainer may be guided in a guide aligned with the stem. The guide will prevent buckling between the upper hinge retainer, the stem, the hinge pin and the rotation stopper pin when these parts are forced downwards by an axial force being applied to the valve stem.

In one embodiment a dual disc check valve provided with a rising stem, makes it possible to allow reverse flow through the valve. The stem, which may be connected to the dual disc assembly, is penetrating the bonnet flange through compressed gaskets or glands. To achieve free flow from downstream the valve to upstream the valve, the dual discs may be lifted clear of the valve bore and the valve seat by applying axial force on the Valve Stem.

The dual disc check valve may further comprise an outside yoke for the guidance of the valve stem through the bonnet flange. The yoke is fixed to the bonnet flange thereby constituting the link between an operator and the bonnet flange and body.

Further, the dual disc check valve may comprise a disc assembly comprising the two discs rotating on a hinge, a rotation stopper, a spring spun around the hinge pin and an upper hinge retainer and lower hinge retainer. The upper hinge retainer being connected to the valve stem or being an integral part of the valve stem.

The above described aspects and embodiments of the present invention may each be combined with any of the other aspects. These and other aspects of the invention will be apparent from and elucidated with reference to the embodiments described hereinafter.

### BRIEF DESCRIPTION OF THE FIGURES

The dual plate check valve according to the invention will now be described in more detail with regard to the accompanying figures. The figures show one way of implementing the present invention and is not to be construed as being limiting to other possible embodiments falling within the scope of the attached claim set.
Figure 1 shows a valve seen from the downstream side with disc assembly in the lowered position with no flow going through the valve,
Figure 2 shows a valve seen from the downstream side when the process media is flowing from the upstream side of the valve to the downstream side of the valve,
Figure 3 shows a valve seen from the downstream side with the disc assembly in the raised position with equal pressure upstream and downstream the valve,
Figure 4 shows an isometric partly sectioned view of the valve shown in Fig.2,
Figure 5 shows an isometric partly sectioned view of the valve shown in Fig.1, wherein the valve is in the closed position,
Figure 6 shows an isometric partly sectioned view of the valve shown in Fig.3, with the disc assembly in raised position, allowing reverse flow through the valve bore.

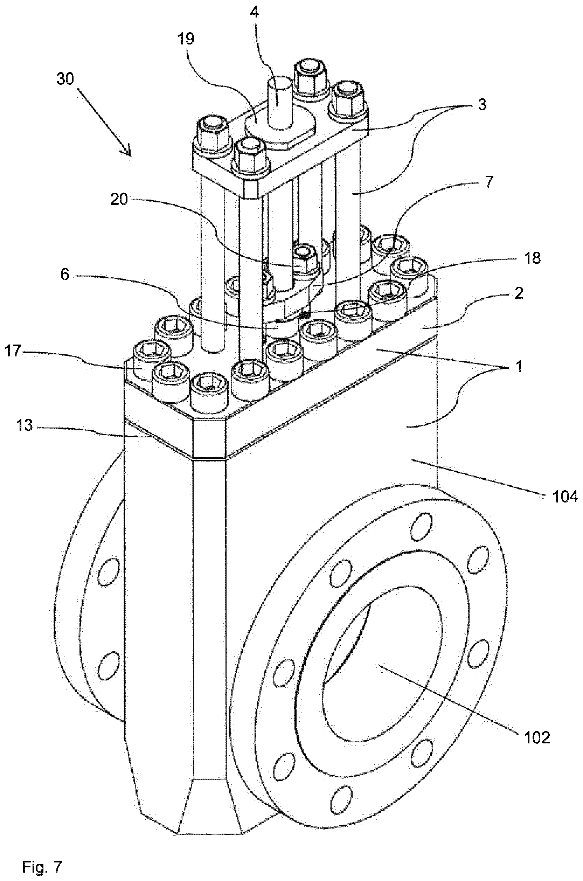

Figure 7 shows an isometric view of the check valve assembly with a rising stem,

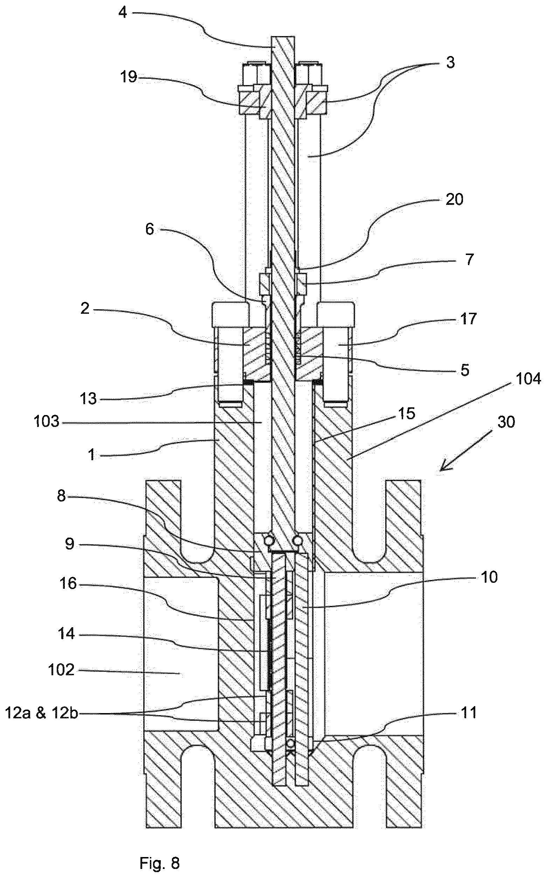

Figure 8 shows a sectioned view of the check valve assembly in the lowered position when no flow is going through the valve bore,

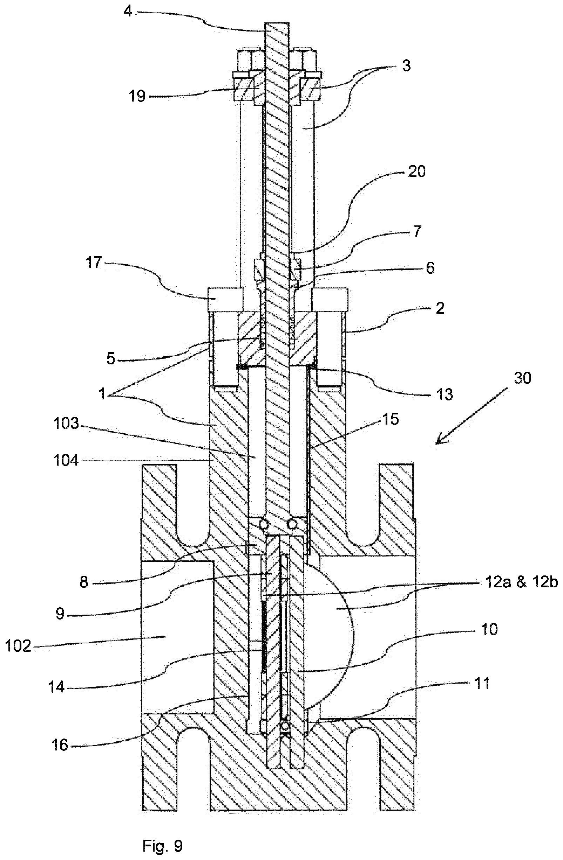

Figure 9 shows a sectioned view of the check valve assembly with the disc assembly in the lowered position when flow is going from the upstream side of the valve to the downstream side of the valve,

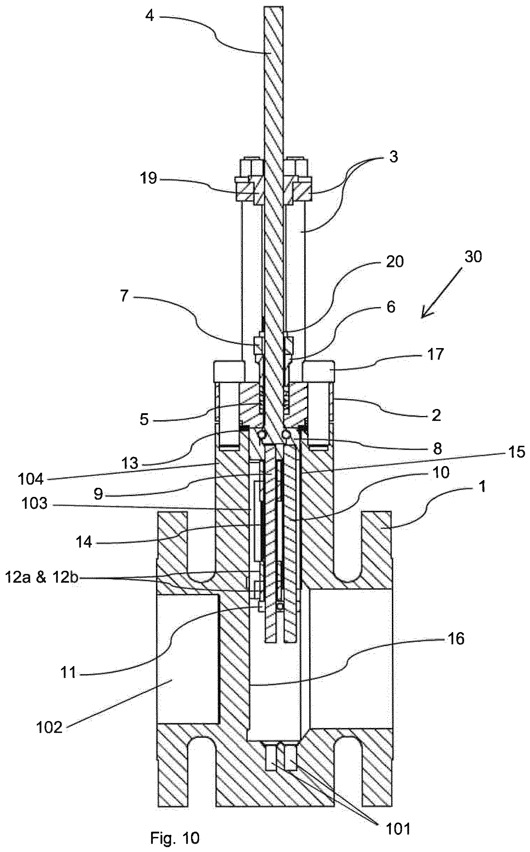

Figure 10 shows a sectioned view of the check valve assembly with the disc assembly in the raised position, and
Figure 11 shows a guiding mechanism for guiding the disc assembly to prevent buckling.

### DETAILED DESCRIPTION OF AN EMBODIMENT

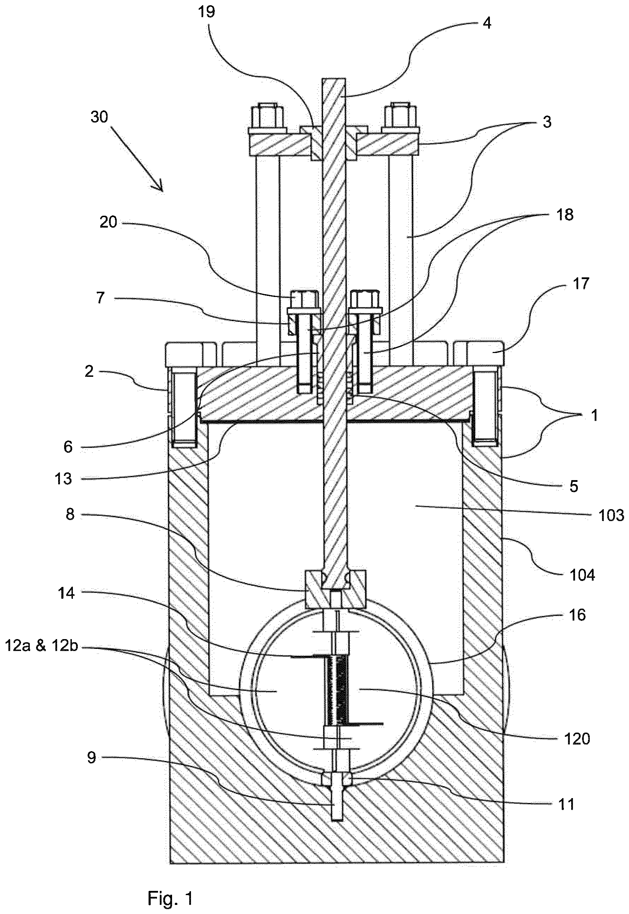

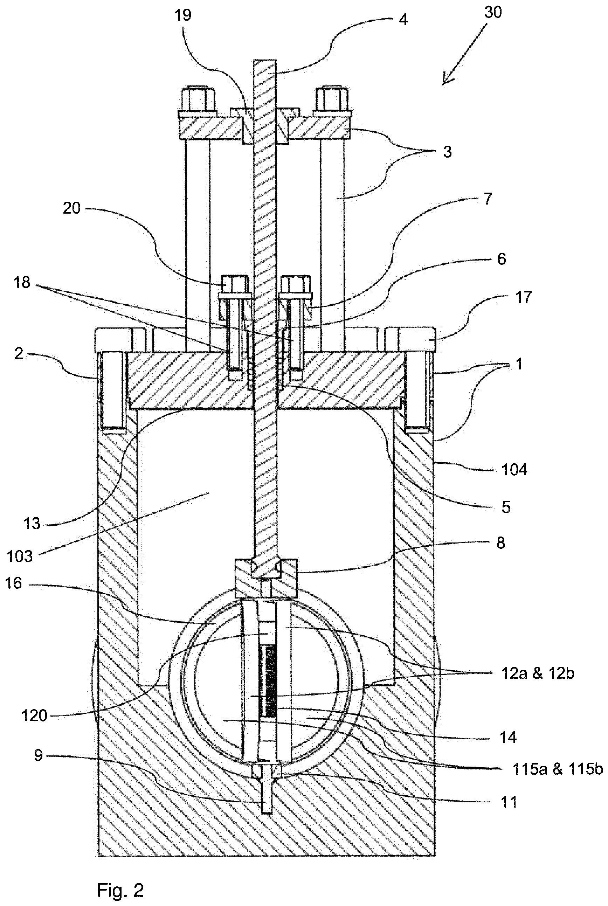

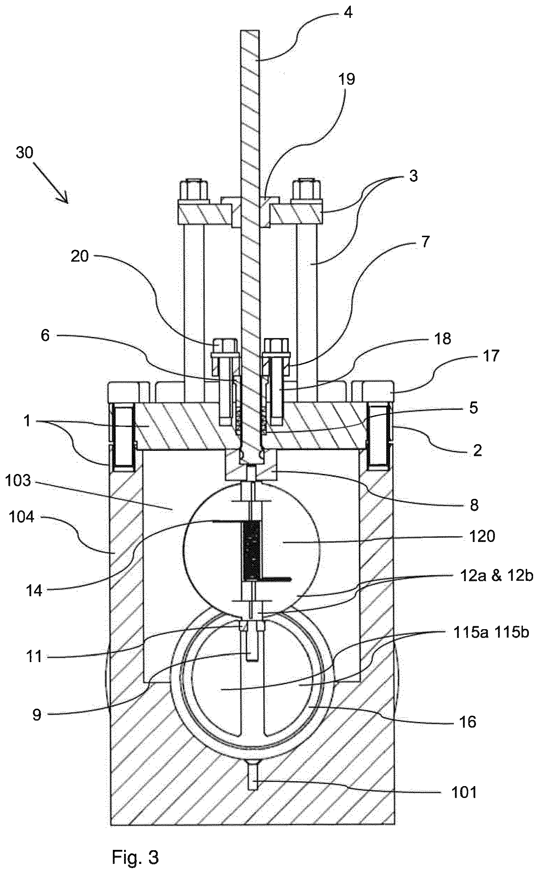

Fig. 1 shows a dual plate check valve assembly 30 comprising a displaceable disc assembly 120 and a rising stem 4 guided by a yoke 3. The disc assembly comprising two hinged disc members 12a, 12b is arranged inside a valve body 104 of a pressure retaining enclosure 1. The disc assembly 120 is displaceable in a transversal or radial direction in relation to the direction of flow through a valve bore 102 divided into two D-shaped flow paths 115a, 115b in the valve body 104. The disc assembly 120 is displaceable between a lowered position as shown in Fig. 1 and 2 and a raised position as shown in Fig. 3.

The pressure retaining enclosure 1 further comprises a bonnet flange 2 which may be bolted or welded onto the valve body. For example, bonnet bolts 17, in form of typically machine bolts or stud bolts with nuts, may be used to fix the bonnet flange to the said valve body. A bonnet gasket 13 is provided which is compressed between the bonnet flange and the valve body by the bonnet bolts to provide a fluid tight pressure resistant enclosure 1. Further, the valve body 104 is provided with flanges for connection with upstream and downstream piping, such as flanges according to ANSI B16.5 or DIN 2632 standard. As is readily understood by the skilled person the valve body may also be connected with upstream and downstream piping by other means such as hub type joints or welding, without departing from the scope of the invention.

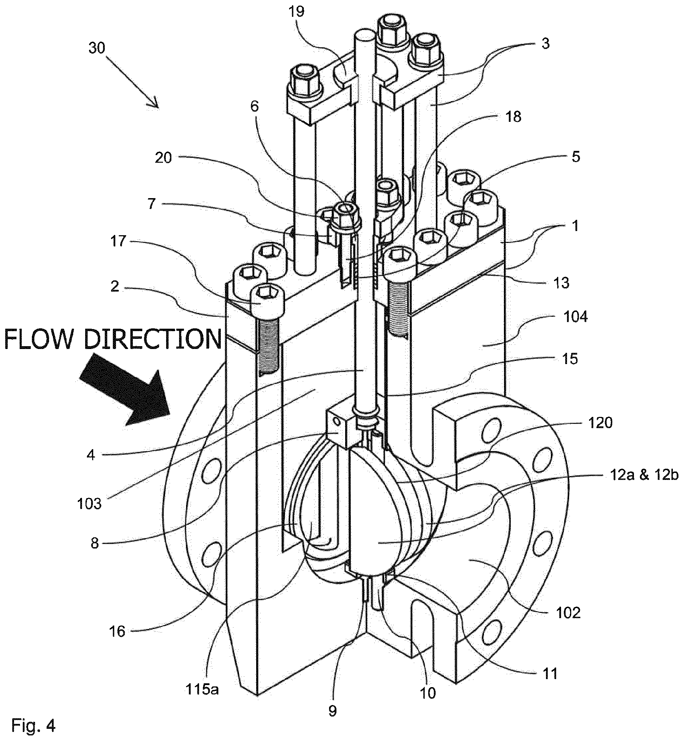

Referring to Fig. 4, the yoke is fixed on a bonnet flange 2 of the pressure retaining enclosure 1 and comprises multiple rods and a yoke flange. As envisaged by the skilled person, the yoke may also be manufactured in one piece and connected with the bonnet flange or as an integral part of the bonnet flange 2. The yoke is guiding the rising stem 4 when this is operated and displaced axially through the bonnet flange 2. The rising stem 4 is provided with threads engaging a yoke bushing 19 provided in the yoke flange, thereby providing an outside screw and yoke principle. In another embodiment the rising stem may be connected with an actuator (not shown) fixed to the yoke 3 or an actuator (not shown) fixed directly to the rising stem. Also the rising stem may be envisaged as an integrated part of an actuator construction for displacing the disc assembly 120.

As seen from the figures the rising stem 4 extends into the valve body wherein it is connected with the disc assembly 120. Suitable bonnet glands 5 compressed by gland flange bolts 18 and nuts 20 via a gland follower 6 and gland flanges 7 provide a sealing between the rising stem 4 and the valve bonnet flange 2.

Referring to Fig. 3 and 4, the disc assembly 120 comprises an upper hinge retainer 8, two valve disc members 12a, 12b, a hinge pin 9, a rotation stopper pin 10, a spring member 14 and a lower hinge retainer 11. Further, the upper and lower hinge retainers are provided with holes into which the hinge pin 9 and the rotation stopper pin 10 are arranged, e.g. by grub screws or glue or other suitable method. The hinge pin 9 constitutes the axis on which the two disc members 12a, 12b are rotating. This rotation is controlled by the rotation stopper pin 10, the spring member 14 and the valve seat 16. In the embodiment shown a single spring member 14 is arranged around the hinge pin 9 and the legs of the spring are arranged to force the disc members 12a, 12b towards the valve seat 16 of the valve body 104. As envisaged by the skilled person, more spring members may be incorporated and spring members may be arranged differently without departing from the scope of the invention.

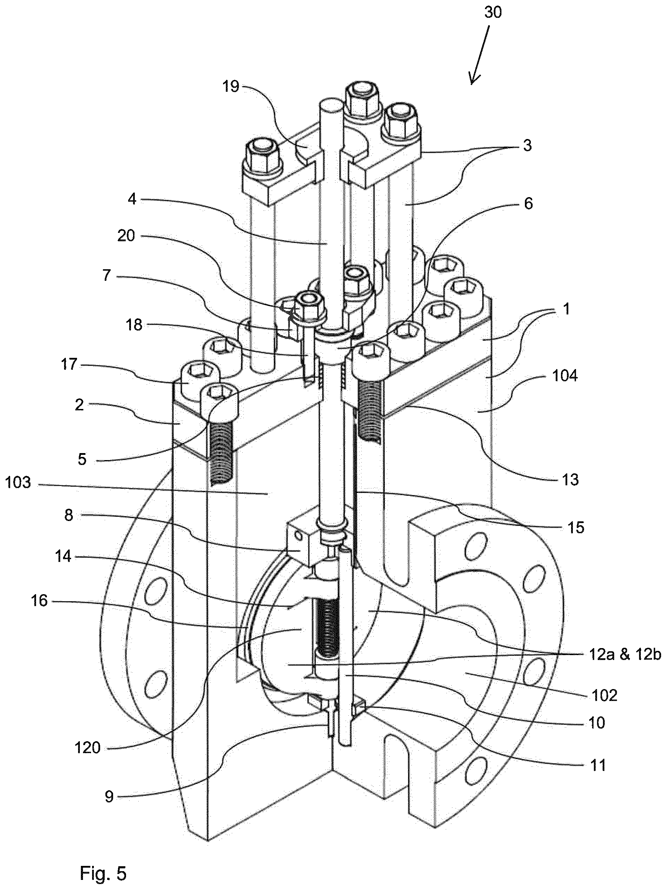

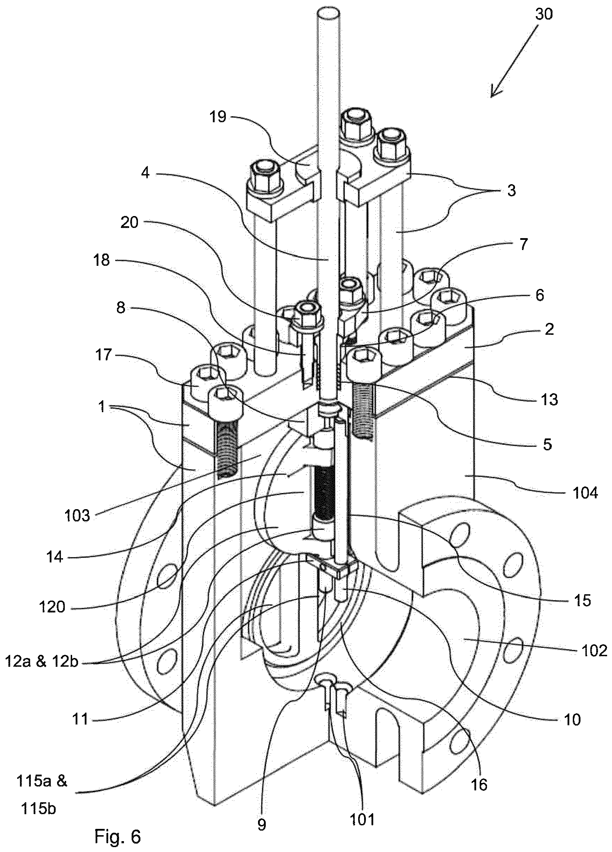

As shown, the disc members 12a, 12b of the disc assembly 120 are substantially D-shaped provided with two hinges each as best seen from Fig. 5. The D-shaped disc members are mounted with the straight side towards each other by the hinges cooperating with the hinge pin so that the disc members together ideally form a circle when the disc are sealing against the valve seat 16. When the disc members are in an open position allowing flow through the valve bore 102, the flow path through the circular valve bore is thus divided into the two D-shaped flow paths 115a, 115b by an integral straight section of the valve body. A substantially planar surface of the disc members is sealing towards a mating surface of the valve seat 16 shown in Fig. 6.

As seen from Fig. 6, steering holes 101 are provided in the valve body in a lower part of the valve bore 102. The steering holes are configured to receive part of the disc assembly 120 to control the position of the disc assembly when this is arranged in the lowered position in the valve bore. In the embodiment shown in Fig. 6, the ends of the hinge pin 9 and the rotation stopper pin 10 exceeds the lower hinge retainer 11 and enters two steering holes in the valve body 104. Alternatively the lower ends of the hinge pin and the rotation stopper pin may be ending in the lower hinge retainer which is received if a suitably shaped bearing groove in the valve house when the disc assembly 120 is in the lowered position. With suitable guiding/fixation of the lower and upper hinge retainers, the bending force on the components of the disc assembly, such as the hinge pin, generated by the flow through the valve bore 102 is evenly taken up in opposite sides of the disc assembly.

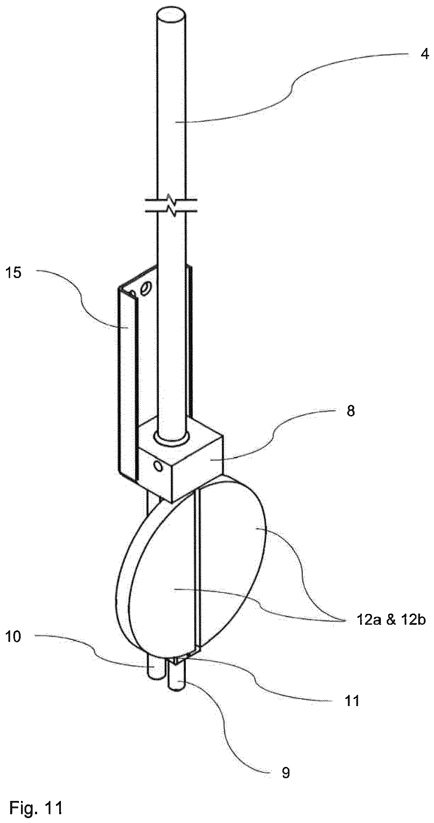

Referring to Fig. 11, the upper hinge retainer 8 is guided in a guiding mechanism 15 aligned with the rising stem 4. The guiding mechanism 15 will prevent buckling of the rising stem and/or damage to the disc assembly 120 including the upper hinge retainer 8, the hinge pin 9 and the rotation stopper pin 10 if an excessive force is applied to these parts during raising or lowering of the disc assembly.

In operation the check valve assembly 30 may be provided as part of a piping, such as an offshore top side piping system for controlling the flow of a process media. The disc assembly 120 may initially be arranged in the lowered position thereby controlling the flow through the valve bore 102. When a need arises for achieving free flow through the valve bore 102 in both directions the disc assembly may be lifted into the retrieval cavity and the raised position by applying axial force on the rising stem. Hereby the disc assembly 120 is transversally displaced in relation to the direction of flow through the valve bore 102. As is readily understood by the skilled person, the rising stem and yoke assembly may be moved in a number of different ways. For example the rising stem and yoke assembly may be provided with a hand wheel (not shown) or other type of interface for engaging with suitable tools. The lower part of the valve body containing the two guiding holes may be manufactured as a separate element fitted to the valve body.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.
Pressure retaining enclosure 1
Bonnet flange 2
Yoke 3
Rising stem 4
Bonnet glands 5
Gland follower 6
Gland flange 7
Upper hinge retainer 8
Hinge pin 9
Rotation stopper pin 10
Lower hinge retainer 11
Hinged disc members 12a, 12b
Bonnet gasket 13
Spring member 14
Guiding mechanism 15
Valve seat 16
Bonnet bolts 17
Gland flange bolts 18
Yoke bushing 19
Nuts 20
Check valve assembly 30
Steering holes 101
Valve bore 102
Valve body 104
D-shaped flow paths 115a, 115b
Disc assembly 120

## Claims

1. A dual plate check valve assembly (30) for controlling the direction of flow in a piping system, comprising:
- a pressure retaining enclosure (1) comprising a valve body (104) having a valve bore (102) and defining a valve seat (16); and
- a disc assembly (120) arranged inside the valve body and comprising two disc members (12a, 12b) adapted to engage with the valve seat to control the flow through the valve bore;
wherein the disc assembly is displaceable arranged inside the valve body in a transverse direction in relation to the direction of flow, and the dual plate check valve assembly comprises a rising stem mechanism (4) configured to transversally displace the disc assembly between a lowered position, wherein the disc assembly may control the flow through the valve bore and a raised position wherein the disc assembly is lifted at least partially clear of the valve bore and the valve seat, leaving the valve bore at least partially open to achieve free flow through the valve bore.

2. A dual plate check valve assembly according to claim 1, wherein the valve body comprises a retrieval cavity (103) into which the disc assembly is lifted when in the raised position.

3. A dual plate check valve assembly according to claim 1 or 2, further comprising a yoke (3) for guiding the rising stem to lift the disc assembly from the valve bore and the valve seat.

4. A dual plate check valve assembly according to any of the previous claims, wherein the pressure retaining enclosure comprises a valve body (104) and a bonnet flange (2) mounted on the valve body, and wherein the rising stem penetrates the bonnet flange through compressed bonnet glands (5) arranged in the in the bonnet flange.

5. A dual plate check valve assembly according to any of the previous claims, wherein the yoke is fixed to the bonnet flange.

6. A dual plate check valve assembly according to any of the previous claims, wherein the disc members (12a, 12b) of disc assembly are rotatable arranged on a hinge pin (9) and one or more spring members (14) arranged around the hinge pin and configured to force the hinged disc members towards the valve seat when the disc assembly is in the lowered position.

7. A dual plate check valve assembly according to claim 6, wherein the hinge pin is an integral part of the rising stem.

8. A dual plate check valve assembly according to claim 6 or 7, wherein the disc assembly further comprises a rotation stopper pin (10) for controlling the rotation of the disc members.

9. A dual plate check valve assembly according to any of claims 6-8, wherein the disc assembly further comprises an upper hinge retainer (8) and a lower hinge retainer (11) into which the hinge pin and the rotation stopper pin is arranged.

10. A dual plate check valve assembly according to any of the previous claims, wherein one or more steering holes (101) are provided in the valve body, the one or more steering holes being configured to receive a part of the disc assembly, such as the hinge pin and/or the rotation stopper, to control the position of the disc assembly when in the lowered position.

11. A dual plate check valve assembly according to any of the previous claims, further comprising a guiding mechanism (15) for preventing buckling of the rising stem and damage to the disc assembly due to the force being applied during operation of the rising stem.

12. A dual plate check valve assembly according to any of the previous claims, wherein the dual plate check valve assembly is configured for use in an offshore top side piping system.

13. A dual plate check valve assembly according to any of the previous claims, wherein the yoke is an open yoke or a closed yoke for the guidance of the rising stem.

## Patentansprüche

1. Doppelplatten-Rückschlagventilanordnung (30) zum Regeln der Strömungsrichtung in einem Rohrleitungssystem, umfassend:
- ein Druckrückhaltegehäuse (1), umfassend einen Ventilkörper (104), der eine Ventilbohrung (102) aufweist und einen Ventilsitz (16) definiert; und
- eine Scheibenanordnung (120), die in dem Ventilkörper angeordnet ist und umfassend zwei Scheibenelemente (12a, 12b), die angepasst sind, um mit dem Ventilsitz in Eingriff zu stehen, um die Strömung durch die Ventilbohrung zu regeln;
wobei die Scheibenanordnung in Bezug auf die Strömungsrichtung in dem Ventilkörper in einer Querrichtung verschiebbar angeordnet ist und die Doppelplatten-Rückschlagventilanordnung einen Mechanismus (4) mit steigender Spindel umfasst, der konfiguriert ist, um die Scheibenanordnung zwischen einer abgesenkten Position querlaufend zu verschieben, wobei die Scheibenanordnung die Strömung durch die Ventilbohrung regeln kann, und eine angehobene Position, wobei die Scheibenanordnung zumindest teilweise angehoben wird, ohne die Ventilbohrung und den Ventilsitz zu berühren, wobei die Ventilbohrung zumindest teilweise offen bleibt, um eine freie Strömung durch die Ventilbohrung zu erreichen.

2. Doppelplatten-Rückschlagventilanordnung nach Anspruch 1, wobei der Ventilkörper einen Rückzugshohlraum (103) umfasst, in den die Scheibenanordnung angehoben wird, wenn sie sich in der angehobenen Position befindet.

3. Doppelplatten-Rückschlagventilanordnung nach Anspruch 1 oder 2, ferner umfassend ein Joch (3) zum Führen der steigenden Spindel, um die Scheibenanordnung aus der Ventilbohrung und dem Ventilsitz anzuheben.

4. Doppelplatten-Rückschlagventilanordnung nach einem der vorhergehenden Ansprüche, wobei das Druckrückhaltegehäuse einen Ventilkörper (104) und einen Deckelflansch (2) umfasst, der an dem Ventilkörper montiert ist und wobei die steigende Spindel durch komprimierte Deckelstopfbüchsen (5), die in dem Deckelflansch angeordnet sind, in den Deckelflansch eindringt.

5. Doppelplatten-Rückschlagventilanordnung nach einem der vorhergehenden Ansprüche, wobei das Joch an dem Deckelflansch fixiert ist.

6. Doppelplatten-Rückschlagventilanordnung nach einem der vorhergehenden Ansprüche, wobei die Scheibenelemente (12a, 12b) der Scheibenanordnung drehbar an einem Scharnierstift (9) angeordnet sind, und ein oder mehrere Federelemente (14) um den Scharnierstift angeordnet und konfiguriert sind, um die angelenkten Scheibenelemente gegen den Ventilsitz zu drängen, wenn sich die Scheibenanordnung in der abgesenkten Position befindet.

7. Doppelplatten-Rückschlagventilanordnung nach Anspruch 6, wobei der Scharnierstift ein integraler Bestandteil der steigenden Spindel ist.

8. Doppelplatten-Rückschlagventilanordnung nach Anspruch 6 oder 7, wobei die Scheibenanordnung ferner einen Drehsicherungsstift (10) zum Regeln der Drehung der Scheibenelemente umfasst.

9. Doppelplatten-Rückschlagventilanordnung nach einem der Ansprüche 6-8, wobei die Scheibenanordnung ferner eine obere Scharnierhalterung (8) und eine untere Scharnierhalterung (11) umfasst, in welcher der Scharnierstift und der Drehsicherungsstift angeordnet sind.

10. Doppelplatten-Rückschlagventilanordnung nach einem der vorhergehenden Ansprüche, wobei eine oder mehrere Lenkbohrungen (101) in dem Ventilkörper bereitgestellt sind, wobei die einen oder mehreren Lenkbohrungen konfiguriert sind, um einen Teil der Scheibenanordnung, wie etwa den Scharnierstift und/oder die Drehsicherung, aufzunehmen, um die Position der Scheibenanordnung zu regeln, wenn sie sich in der abgesenkten Position befindet.

11. Doppelplatten-Rückschlagventilanordnung nach einem der vorhergehenden Ansprüche, ferner umfassend einen Führungsmechanismus (15), um eine Knickung der steigenden Spindel und Schäden an der Scheibenanordnung aufgrund der während des Betriebs der steigenden Spindel angewendeten Kraft zu verhindern.

12. Doppelplatten-Rückschlagventilanordnung nach einem der vorhergehenden Ansprüche, wobei die Doppelplatten-Rückschlagventilanordnung zur Verwendung in einem Offshore-Topside-Rohrleitungssystem konfiguriert ist.

13. Doppelplatten-Rückschlagventilanordnung nach einem der vorhergehenden Ansprüche, wobei das Joch ein offenes Joch oder ein geschlossenes Joch zum Führen der steigenden Spindel ist.

## Revendications

1. Ensemble clapet anti-retour à deux battants (30) permettant de commander le sens d'écoulement dans un système de canalisation, comprenant :
- une enceinte de retenue de pression (1) comprenant un corps de clapet (104) possédant un alésage de clapet (102) et définissant un siège de clapet (16) ; et
- un ensemble de disques (120) agencé à l'intérieur du corps de clapet et comprenant deux éléments disques (12a, 12b) conçus pour venir au contact du siège de clapet pour commander l'écoulement à travers l'alésage de clapet ;
dans lequel l'ensemble de disques est agencé avec faculté de déplacement à l'intérieur du corps de clapet dans une direction transversale au sens d'écoulement, et l'ensemble clapet anti-retour à deux battants comprend un mécanisme de tige d'élévation (4) conçu pour déplacer transversalement l'ensemble de disques entre une position abaissée,
dans laquelle l'ensemble de disques peut commander l'écoulement à travers l'alésage de clapet, et une position élevée dans laquelle l'ensemble de disques est soulevé en étant au moins partiellement dégagé de l'alésage de clapet et du siège de clapet, laissant l'alésage de clapet au moins partiellement ouvert pour obtenir un écoulement libre à travers l'alésage de clapet.

2. Ensemble clapet anti-retour à deux battants selon la revendication 1, dans lequel le corps de clapet comprend une cavité de récupération (103) dans laquelle l'ensemble de disques est soulevé lorsqu'il est en position élevée.

3. Ensemble clapet anti-retour à deux battants selon la revendication 1 ou 2, comprenant en outre une fourche (3) pour guider la tige d'élévation pour soulever l'ensemble de disques depuis l'alésage de clapet et le siège de clapet.

4. Ensemble clapet anti-retour à deux battants selon l'une quelconque des revendications précédentes, dans lequel l'enceinte de retenue de pression comprend un corps de clapet (104) et une bride de chapeau (2) montée sur le corps de clapet, et dans lequel la tige d'élévation pénètre dans la bride de chapeau à travers des presse-étoupes de chapeau (5) compressés agencés dans la bride de chapeau.

5. Ensemble clapet anti-retour à deux battants selon l'une quelconque des revendications précédentes, dans lequel la fourche est fixée à la bride de chapeau.

6. Ensemble clapet anti-retour à deux battants selon l'une quelconque des revendications précédentes, dans lequel les éléments disques (12a, 12b) de l'ensemble de disques sont agencés rotatifs sur une broche de charnière (9) et un ou plusieurs éléments de ressort (14) agencés autour de la broche articulée et conçus pour contraindre les éléments disques de charnière vers le siège de clapet lorsque l'ensemble de disques est dans la position abaissée.

7. Ensemble clapet anti-retour à deux battants selon la revendication 6, dans lequel la broche de charnière fait partie intégrante de la tige d'élévation.

8. Ensemble clapet anti-retour à deux battants selon la revendication 6 ou 7, dans lequel l'ensemble de disques comprend en outre une broche (10) de butée de rotation pour contrôler la rotation des éléments disques.

9. Ensemble clapet anti-retour à deux battants selon l'une quelconque des revendications 6 à 8, dans lequel l'ensemble de disques comprend en outre un élément de retenue (8) d'articulation supérieure et un élément de retenue (11) d'articulation inférieure dans lesquels la broche de charnière et la broche de butée de rotation sont agencées.

10. Ensemble clapet anti-retour à deux battants selon l'une quelconque des revendications précédentes, dans lequel un ou plusieurs orifices d'orientation (101) sont ménagés dans le corps de clapet, le ou les orifices d'orientation étant conçus pour accueillir une partie de l'ensemble de disques, notamment la broche de charnière et/ou la butée de rotation, pour contrôler la position de l'ensemble de disques en position abaissée.

11. Ensemble clapet anti-retour à deux battants selon l'une quelconque des revendications précédentes, comprenant en outre un mécanisme de guidage (15) pour éviter la déformation de la tige d'élévation et des dommages à l'ensemble de disques en raison de la force appliquée pendant le fonctionnement de la tige d'élévation.

12. Ensemble clapet anti-retour à deux battants selon l'une quelconque des revendications précédentes, dans lequel l'ensemble clapet anti-retour à deux battants est conçu pour être utilisé dans un système de canalisation latéral supérieur en haute mer.

13. Ensemble clapet anti-retour à deux battants selon l'une quelconque des revendications précédentes, dans lequel la fourche est une fourche ouverte ou une fourche fermée pour le guidage de la tige d'élévation.
